# NEW EUROPEAN PATENT SPECIFICATION

(11) **EP 3 431 357 B2**
(45) Date of publication and mention of the opposition decision: **25.01.2023**
(45) Mention of the grant of the patent: 25.12.2019
(21) Application number: 18188029.5
(22) Date of filing: 18.05.2012
(51) Int. Cl.: B61F 1/08, B61D 17/00, B61F 1/12

(54) **VEHICLE BODY STRUCTURE ADAPTED FOR USE IN RAILROAD VEHICLE AND PROVIDED WITH WIRE/PIPE MODULE, AND METHOD FOR MANUFACTURING SAME**
FAHRZEUGKAROSSERIESTRUKTUR ZUR VERWENDUNG IN EINEM SCHIENENFAHRZEUG MIT EINEM DRAHT-/ROHRMODUL UND HERSTELLUNGSVERFAHREN DAFÜR
STRUCTURE DE CARROSSERIE DE VÉHICULE APTE À ÊTRE UTILISÉE DANS UN VÉHICULE FERROVIAIRE ET ÉQUIPÉE D'UN MODULE FIL/TUYAU, ET PROCÉDÉ DE FABRICATION DE CETTE STRUCTURE

(30) Priority: 14.06.2011 JP 2011132600
(43) Date of publication of application: 23.01.2019
(62) Divisional of application: 12800090.8
(73) Proprietor: Hitachi, Ltd., Chiyoda-ku Tokyo 100-8280 (JP)
(72) Inventor: NAKAMURA, Hideyuki, Kudamatsu-shi, Yamaguchi 744-8601 (JP); KANEYASU, Tadamasa, Kudamatsu-shi, Yamaguchi 744-8601 (JP); MOCHIDA, Toshihiko, Kudamatsu-shi, Yamaguchi 744-8601 (JP); MORITA, Yosuke, Kudamatsu-shi, Yamaguchi 744-8601 (JP)
(74) Representative: Mewburn Ellis LLP

(56) References cited:
- EP-A1- 2 204 309
- EP-A2- 2 110 291
- GB-A- 1 580 362
- JP-A- S5 854 974
- JP-A- H01 156 167
- JP-A- 2006 224 781
- JP-A- 2010 254 091
- US-A- 2 309 024
- US-A- 2 366 709
- US-A- 2 946 297
- "London Underground S7 and S8 Stock", Wikipedia, 10 June 2011 (2011-06-10),
- Anonymous: "Railway Herald", Railway Herald, vol. 233, 9 August 2010 (2010-08-09), pages 1-5,
- Anonymous: "British Rail Class 378", Wikipedia Wikipedia, 10 June 2011 (2011-06-10), pages 1-6, [retrieved on 2019-09-09]
- Anonymous: "The Railway Herald", The Railway Herald, vol. 148, 22 September 2008 (2008-09-22), pages 1-5,
- Anonymous: "The Railway Herald", The Railway Herald, vol. 260, 21 March 2011 (2011-03-21), pages 1-5,
- Compilation of "Rolling Stock Information Sheets?, 2nd Edition, March 2007 published by Transport for London

## Description

### [Technical Field]

The present invention relates to a vehicle body structure having a bolster beam and a center beam crossing the same on a lower surface of an underframe constituting a floor of a railroad vehicle, in which wires and pipes are laid under the floor, and a method for manufacturing the same.

### [Background Art]

Recently, aluminum alloy materials having superior extrusion performance, corrosion resistance and weldability for railroad vehicles have been developed. Along therewith, the current trend of railroad vehicles is to adopt vehicle bodies effectively utilizing large-sized shape materials made of aluminum alloy, from the viewpoint of reducing weight and rationalizing fabrication.

The vehicle body (structure) of a railroad vehicle is composed of side structures, end structures, a roof structure and an underframe. On both longitudinal ends of the vehicle body on a lower surface of the underframe are disposed center beams with a coupler for mutually connecting adjacent cars, and bolster beams for supporting the weight of the vehicle body via a bogie. Generally, the center beams and the bolster beams are mutually crossed and assembled to adopt a vehicle body structure having sufficient strength for receiving the heavy load acting on the vehicle body via couplers and bogies. The center beams and bolster beams are extruded shape members made of aluminum alloy and having large sizes, which are welded to the lower surface of the underframe, which is also composed of extruded shape members formed of aluminum alloy.

Various devices for power supply systems, control systems, high-pressure air systems and so on are crammed into the space under the floor of the railroad vehicle. In this state, wires and pipes connecting these devices are disposed under the floor of the railroad vehicle, but it is difficult to ensure enough space for disposing these wires and pipes, especially in the vicinity of a bogie. A penetration pipe through which wires and pipes are collectively passed is an effective means for ensuring the space for mounting the wires and pipes. Currently, a penetration pipe is disposed on a bolster beam positioned above the bogie, and the wires and pipes are laid through this penetration pipe. One example of such vehicle body structure is a structure illustrated in Figs. 8 and 9 of patent literature 1. Further, the present applicant has proposed a vehicle body structure capable of preventing deterioration of strength of bolter beam and increasing the number of components accompanying the laying of a penetration pipe, by utilizing the space within the center beams for wires and pipes instead of the penetration pipe (refer to Figs. 1 and 2 of patent literature 1).

On the other hand, a method for reducing the cost and lead time required to manufacture the vehicle body, such as a method for assembling wires and pipes in advance by outwork, or a method for mounting to the vehicle body a module having bundled multiple wires and pipes together, can be considered. For example, as for wiring, the work to be performed at the manufacture site of the vehicle body can be minimized by assembling connectors to be inserted to devices in advance, and the mounting of wires to the vehicle body can be fabricated by forming a module by bundling together multiple wires.

However, when the above methods are applied to the space under the floor of the vehicle, there is a drawback that sufficient space for arranging the wires and pipes cannot be ensured in the vicinity of the bogie. For example, as for wires, the connectors for connecting the wires do not pass through the space formed within the penetration pipes or the center beams, so that it was necessary to assemble connectors for connecting wires after passing the wires to the space within the penetration pipes or the center beams, and as for pipes, they had to be bended arbitrarily corresponding to the positions for passing pipes in the space within the penetration pipes or the center beams. Therefore, it was difficult to assemble wires and pipes to be disposed under the floor by outwork, or to mount the wire/pipe module under the floor, so that sufficient reduction of cost and lead time for manufacturing the vehicle body had not been possible according to the prior art.

### [Citation List]

### [Patent Literature]

[PTL 1]
   Japanese Patent Application Laid-Open Publication No. 2009-255641
PTL 2

Document EP 2 204 309 A1 discloses a vehicle body structure having an underframe formed by a floor of a vehicle body, side beams disposed at both width-direction ends of the vehicle body and extending in a longitudinal direction of the vehicle body, bolster beams extending in the width direction of the vehicle body, and center beams crossing the bolster beams and extending in the longitudinal direction of the vehicle body toward end sections of the vehicle body.

### [Summary of Invention]

### [Technical Problem]

Thus, the problem to be solved according to the present invention is to realize a vehicle body structure having wires and pipes laid under the floor of the vehicle, wherein sufficient space for passing wires and pipes in the vicinity of a bogie can be ensured, and a method for manufacturing such vehicle body structure.

The object of the present invention is to ensure sufficient space for disposing wires and pipes in the vicinity of a bogie, enable assembling of wires and pipes to be disposed under the floor of the vehicle by outwork, and enable a wire/pipe module to be mounted under the floor of the vehicle, to thereby provide a vehicle body structure capable of reducing the cost and lead time required to manufacture the vehicle body, and the method for manufacturing the same.

### [Solution to Problem]

In order to solve the problems and achieve the objects mentioned above, the vehicle body structure in a first aspect of the present invention has an underframe according to claim 1.

Further, the method for manufacturing a vehicle body structure in a second aspect of the present invention is provided according to claim 9.

### [Advantageous Effects of Invention]

According to the vehicle body structure and the method for manufacturing the same of the present invention, sufficient space for wires and pipes can be ensured in the vicinity of a bogie, and the assembling of wires and pipes to be disposed under the floor of the vehicle by outwork and the mounting of wire/pipe modules under the floor of the vehicle using this space becomes possible, so that the cost and lead time required to manufacture the vehicle body can be reduced.

### [Brief Description of Drawings]

[Fig. 1] Fig. 1 is a perspective view of a bottom surface illustrating one embodiment of a vehicle body structure according to the present invention.
[Fig. 2] Fig. 2 is a perspective view showing section A of the vehicle body structure illustrated in Fig. 1 in enlarged view.
[Fig. 3] Fig. 3 is a perspective view showing a bolster beam from an underframe side.
[Fig. 4] Fig. 4 is a view showing an underframe prior to mounting wires and pipes.
[Fig .5] Fig. 5 is a view showing an underframe after mounting the wires and pipes.
[Fig. 6] Fig. 6 is a view showing an underframe after mounting the bolster beam.
[Fig. 7] Fig. 7 is a cross-sectional view taken at plane B-B of the underframe shown in Fig. 6 after mounting the bolster beam.
[Fig. 8] Fig. 8 is a perspective view showing section A in enlarged view according to another embodiment of a vehicle body structure of the present invention.

### [Description of Embodiments]

Now, a preferred embodiment of a vehicle body structure and a method for manufacturing the same according to the present invention will be referred to with reference to the drawings.

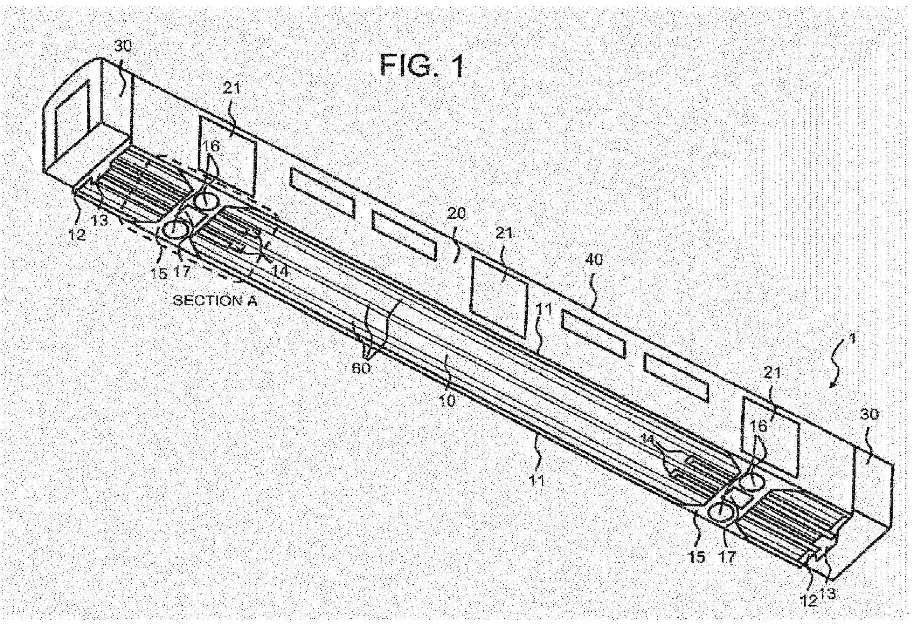

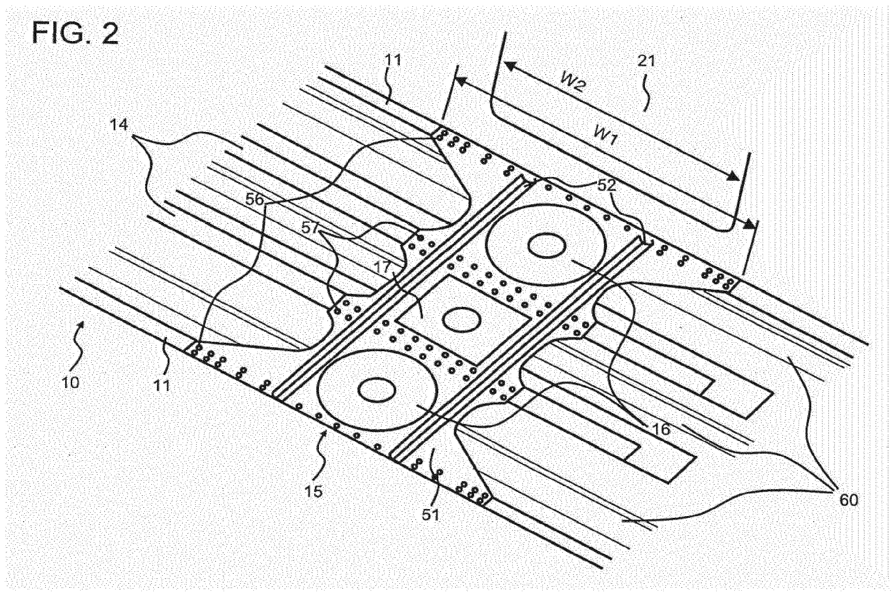

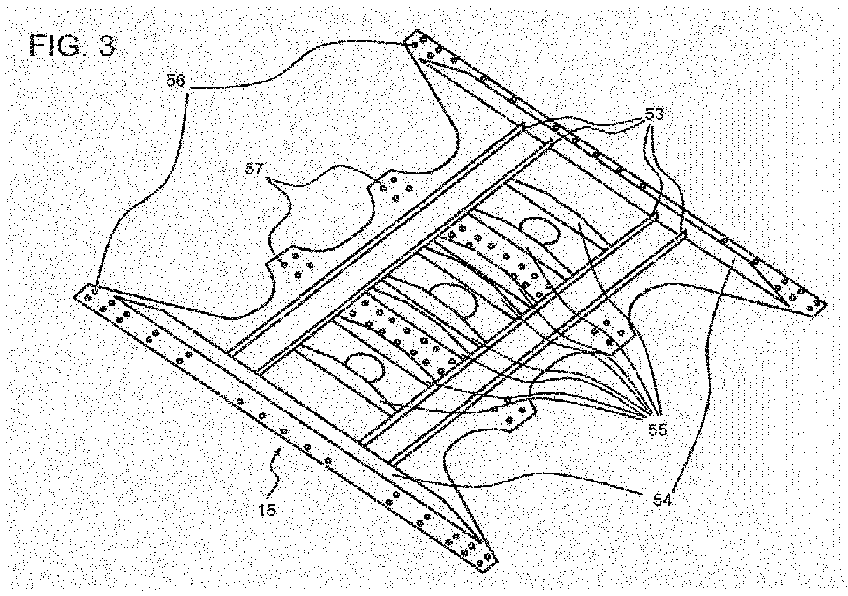

Fig. 1 is a perspective view of a bottom side of a vehicle body structure according to one preferred embodiment of the present invention (perspective view showing the vehicle body from the bogie side), Fig. 2 is a perspective view illustrating section A of the vehicle body structure shown in Fig. 1 in enlarged view, and Fig. 3 is a perspective view showing a bolster beam from the underframe side.

According to the vehicle body structure illustrated in Figs. 1 through 3, a vehicle body 1 is composed of side structures 20 and 20 (only one of which is shown) erected from both width-direction ends of an underframe 10, end structures 30 and 30 erected from both longitudinal ends of the underframe 10, and a roof structure 40 mounted to the upper ends of side structures 20 and 20 and end structures 30 and 30. Side beams 11 and 11 to be coupled to side structures 20 and 20 are disposed on both width-direction ends of the underframe 10, and end beams 12 and 12 to be coupled to end structures 30 and 30 are disposed on both longitudinal ends of the underframe 10.

Coupler bearings 13 and 13 having couplers (not shown) for coupling a vehicle body 1 to adjacent vehicle bodies are disposed close to a center area in the width direction of the end beams 12 and 12, and center beams 14 and 14 extending in the longitudinal direction of the underframe 10 are arranged at a rear section (close to a longitudinal center of the underframe 10) of the end beams 12 and 12. Bolster beams 15 and 15 extending in the width direction of the underframe 10 are disposed at a position separated by a given distance from the end beams 12 and 12 toward the longitudinal center area of the underframe 10. The bolster beams 15 and 15 are connected to the center beams 14 and 14, and also connected to a bogie (not shown) at positions corresponding to air spring bearings 16 and 16 and center pin bearings 17 and 17.

Doorways 21, 21 and 21 through which passengers can get on or off the vehicle and multiple windows are formed on the side structures 20 and 20. The longitudinal positions of the two doorways 21 and 21 arranged close to the ends of the body vehicle on the side structure 20 are close to the longitudinal positions of the bolster beams 15 and 15 on the underframe 10.

The underframe 10, the side structures 20 and the roof structure 40 are formed by arranging multiple hollow extruded shape members formed of aluminum alloy along the longitudinal direction of the vehicle body, and joining the width-direction ends of the adjacent hollow extruded shape members. The end structures 30 are formed by joining plate-like members and beam-like members made of aluminum alloy. The side beams 11 are hollow extruded shape members made of aluminum alloy arranged along the longitudinal direction of the vehicle body, and are joined to both width-direction ends of the underframe 10. End beams 12 are formed by joining plate-like members and beam-like members formed of aluminum alloy, and are joined to both longitudinal ends of the underframe 10. The joining of the side beams 11 to the side structures 20 and the side structures 20 to the roof structure 40 are performed via mechanical fastening means such as bolts and rivets. The joining of the end structures 30 to end beams 12, side structures 20 and the roof structure 40 are performed via mechanical fastening means such as bolts and rivets.

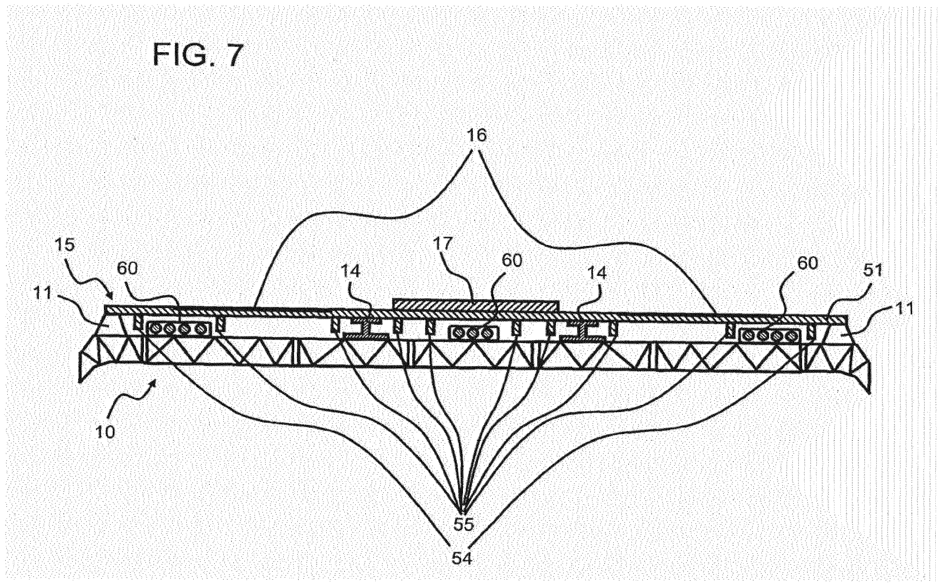

The center beams 14 are extruded shape members having an I-shaped cross-sectional shape (a shape formed by tipping an H-shape sideways; refer to Fig. 7) formed of aluminum alloy and arranged along the longitudinal direction of the vehicle body, which are joined to the lower surface of the underframe 10 and the rear sides of the end beams 12 (near the longitudinal center area of the underframe 10). The cross-sectional shape of the center beams 14 can be U-shaped, for example, instead of I-shaped. The end beams 12 and the center beams 14 may be formed of steel, and in that case, the beams are connected to the underframe 10 using mechanical fastening means such as bolts and rivets. The fastening of the end beams 12 and the center beams 14 is realized by welding if the beams are formed of identical materials, and realized by mechanical fastening means such as bolts and rivets if the beams are formed of different materials. However, if the center beams 14 extending for a long distance in the longitudinal direction of the vehicle body are formed of steel, it is difficult to manage the flatness of the beams since mechanical fastening means must be used to join the beams to the underframe 10, and the weight thereof increases significantly. Therefore, from the viewpoint of managing fabrication of the vehicle body and reducing the weight thereof, it is better to join the center beams 14 formed of aluminum alloy to the underframe 10 via welding.

The bolster beams 15 are formed by welding width-direction beams 52 and 53 and longitudinal beams 54 and 55 which are beam-like members made of steel to plate-like members 51 made of steel. The plate-like member 51 can be formed by cutting a single plate member, or can be formed by joining multiple plate members. Air spring bearings 16 and a center pin bearing 17 which join air springs and a center pin which are components disposed on the bogie side are smoothly finished to correspond to the shapes of the components disposed on the bogie side, so that they can be coupled accurately to the bogie. Each plate-like member 51 has projections protruded toward the longitudinal direction of the underframe 10 at positions corresponding to the side beams 11 and the center beams 14. A longitudinal distance W1 of the underframe 10 between the ends of both projections corresponding to the position of the side beams 11 is greater than a width W2 of a doorway 21 disposed close to the bolster beam 15. The plate-like member 51 is fastened via bolts to the lower surface of the side beams 11 at bolt fastening sections 56 (only a portion of which is denoted by the reference number) corresponding to the positions of the side beams 11, and via bolts to the lower surface of the center beams 14 at bolt fastening sections 57 (only some of which are denoted by the reference number) corresponding to the positions of the center beams 14. The distances between the bolt fastening sections 56 and 57 in the longitudinal direction of the underframe 10 are small near the end of the projections. Since the lower surface of the side beams 11 and the lower surface of the center beams 14 are separated from the lower surface of the underframe 10 by the same distance in the vertical direction of the vehicle body, the plate-like member 51 is substantially parallel with the underframe 10, and sufficient space exists between the lower surface of the underframe 10 and the upper surface of the plate-like member 51.

Width-direction beams 52 are joined to the lower surface of the plate-like member 51 at positions that do not interfere with the air spring bearings 16 and the center pin bearing 17. Width-direction beams 53 are attached to the upper surface of the plate-like member 51 at positions close to a rear surface of the width-direction beams 52 joined to the lower surface of the plate-like member 51, and are attached at both ends thereof to the longitudinal beams 54. Multiple longitudinal beams 55 are joined to the rear surfaces corresponding to positions of the air spring bearings 16 and the center pin bearing 17, and are joined at both ends thereof with the width-direction beams 53. The height of the width-direction beams 53 and the longitudinal beams 54 and 55 in the vertical direction of the vehicle body attached to the upper surface of the plate-like member 51 is smaller than the distance between the lower surface of the underframe 10 and the upper surface of the plate-like member 51.

On the lower surface of the underframe 10 are joined wire/pipe modules 60 having bundled multiple wires and pipes along the longitudinal direction of the vehicle body. An appropriate method is selected for joining the wire/pipe module 60 to the lower surface of the underframe 10 according to the design and material of the wire/pipe modules 60, such as screws, bolts and adhesives. The wires and pipes joined to the respective devices are branched from the wire/pipe modules 60 near the respective devices. In the vicinity of a bogie, the wire/pipe modules 60 are passed through the space formed between the lower surface of the underframe 10 and the upper surface of the plate-like member 51 of the bolster beam 15. Therefore, the vertical height of the width-direction beams 53 attached to the upper surface of the plate-like member 51 in the vehicle body is suppressed to a level allowing the wire/pipe module 60 to pass through the lower surface of the underframe 10. The wire/pipe modules 60 are passed through areas that do not interfere with the longitudinal beams attached to the upper surface of the plate-like member 51.

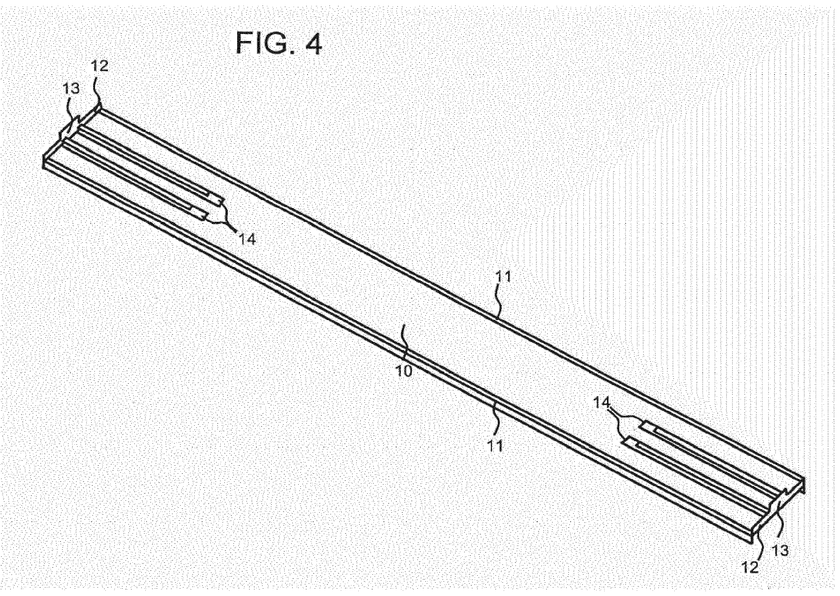

Now, we will describe the procedure for mounting the wires and pipes to the vehicle body according to the present embodiment. Fig. 4 shows a view of an underframe prior to mounting the wires and pipes (showing the lower surface of the underframe from the upper side). The underframe 10 is placed on a surface plate (not shown) in the state shown in the drawing (state in which the lower surface of the underframe faces up), wherein side beams 11 and 11 are attached to both width-direction ends, end beams 12 and 12 are attached to both longitudinal ends, and center beams 14 and 14 are attached rearward from each end beams 12 (close to the center in the longitudinal direction of the underframe 10), respectively. In this state, the wire/pipe modules 60 are mounted to a lower surface (the upper side in the drawing) at positions that do not interfere with the center beams 14.

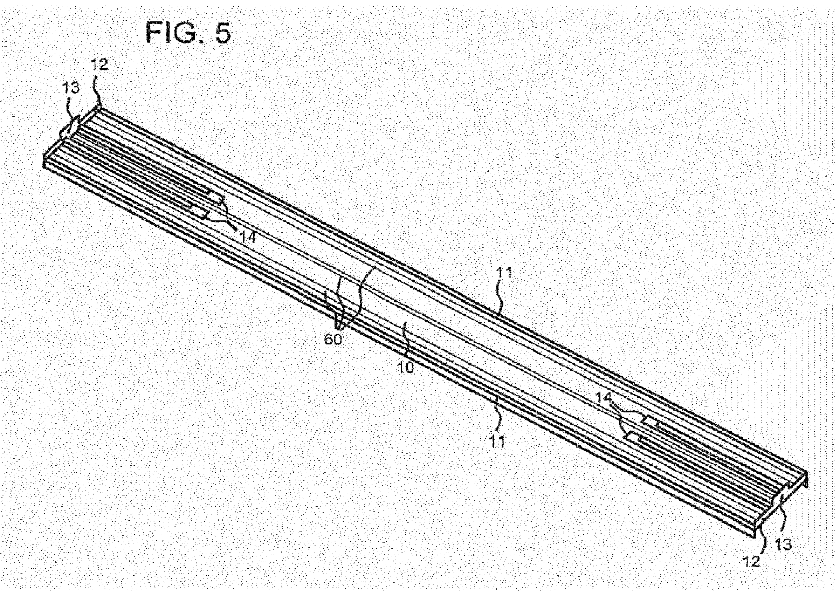

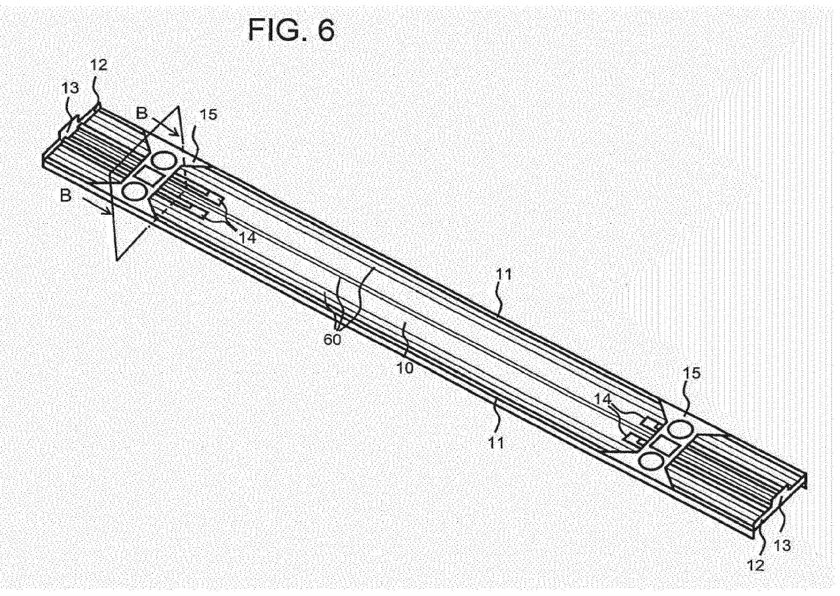

Fig. 5 illustrates the underframe after having the wires and pipes mounted thereto (showing the lower surface of the underframe from the upper side). In this state, the bolster beam 15 is fastened via bolts to the lower surface (the upper side in the drawing) of the side beams 11 and the center beams 14. At this time, the positions of the wire/pipe modules 60 are adjusted in advance so that the wire/pipe modules 60 do not interfere with the beam-like members of the bolter beams 15. Fig. 6 is a view of the underframe having mounted the bolter beams (showing the lower surface of the underframe from the upper side), and Fig. 7 shows a B-B cross-section of Fig. 6. The positions of the longitudinal beams 54 disposed on both width-direction ends of the vehicle body and the longitudinal beams 55 disposed on the rear surface of the air spring bearing 16 and the center pin bearing 17 of the bolter beam 15, the center beams 14 and the wire/pipe modules 60 all differ in the width-direction of the vehicle body, and they do not interfere with one another. Thereafter, after joining the side beams 11 to the side structures 20 and the side structures 20 to the roof structure 40 via mechanical fastening means such as bolts and rivets, the end structures 30 and the end beams 12, the side structures 20 and the roof structure 40 are joined via mechanical fastening means such as bolts and rivets. The vehicle body structure manufactured via the above-described process becomes the vehicle body structure illustrated in Fig. 1.

According to this arrangement, the wires and pipes can be passed through the wide space formed between the lower surface of the underframe 10 and the upper surface of the bolster beam 15, allowing the connectors for connecting wires to be assembled in advance or the pipes to be routed straight, so that the wires and pipes can be assembled in advance by outwork to minimize the work performed in the manufacturing site of the vehicle body, and the mounting of wires and pipes to the vehicle body can be facilitated by bundling multiples wires and pipes together into a module. Even further, the vehicle body after having the wire/pipe modules 60 mounted is fabricated using mechanical fastening means such as bolts and rivets, so that the damaging of the wires and pipes by the heat applied during welding can be prevented. Therefore, wires and pipes can be mounted through operations performed by looking down at the underframe 10. According to this arrangement, the cost and lead time required to manufacture the vehicle body can be reduced.

In the present arrangement where the main member of the bolster beam 15 is a plate-like member 51, there is fear that the bolster beam 15 may lack sufficient strength, but since the longitudinal and width-direction beam-like members 52 through 55 receive the load applied from the bogie in the left-right directions and the front-rear directions, and the beam is formed of steel having a high strength, sufficient strength can be ensured to various loads applied thereto during operation including the load applied from the coupler. Furthermore, in the bolt fastening sections where load is applied in a concentrated manner, projections are formed to increase the number of bolts, and the intervals between fastening of bolts in the projections where load is concentrated are shortened to strengthen these sections. In addition, according to the present embodiment where the doorways 21 are positioned close to the bolster beams 15, the distance W1 between the projections of the bolter beams 15 corresponding to the position of the side beams 11 is set greater than width W2 of the doorways 21, so that the load applied on the bolt fastening sections can be transmitted reliably to the side structures.

In the present embodiment, the bolster beam 15 is made of steel, but a similar effect can be exerted even if the beam is made of aluminum alloy. In that case, the plate thickness of the plate-like members 51 of the bolster beams 15 must be increased, so that the space for passing the wires and pipes is reduced, but the weight of the bolster beams 15 can be reduced. In that case, the side beams 11, the center beams 14 and the bolster beams formed of the same material can be joined via welding. However, welding must be performed carefully so that the wires and pipes are not damaged by the heat applied during welding.

Further according to the present embodiment, the side beams 11, the center beams 14 and the bolster beams 15 are fastened via bolts, but they can be fastened via rivets to exert the same effects. In that case, re-fastening of the bolster beams 15 will be difficult, but the work time can be shortened.

According further to the present embodiment, the bolster beams 15 are joined to the lower surface of the side beams 11 and the center beams 14, but even if the bolster beams 15 are joined to the side surface of the side beams 11 and the center beams 14, the same effects can be exerted. In that case, the bolster beams 15 must be formed in a divided manner, so that fabrication of the bolster beams takes time and effort, but the height of the center beams 14 can be increased, so that the strength of the beams can be advantageously increased.

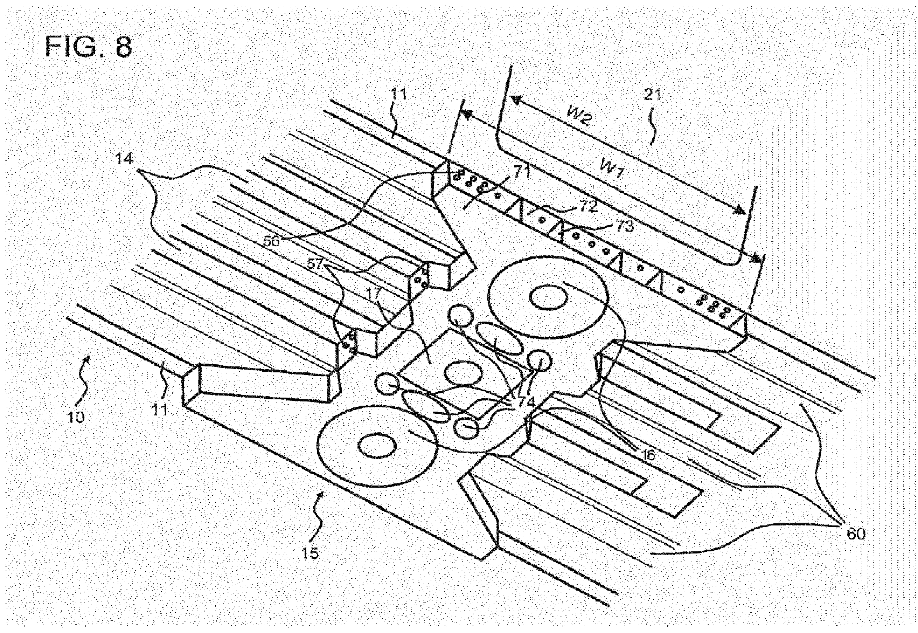

Fig. 8 is a perspective view showing an enlarged view of section A (refer to Fig. 1) according to another embodiment of the vehicle body structure of the present invention.

The procedures for mounting to the vehicle body the wires and pipes and the vehicle body structures omitting the structures of the bolster beams 15 are the same as the embodiment illustrated in Figs. 1 through 7, so that detailed descriptions of the components, the materials and the procedures are omitted. The reference numbers used in the descriptions and drawings in the present embodiment are the same as the numbers referred to in Figs. 1 through 7.

The bolster beam 15 is a composite structure body formed of a lower side plate-like member 71, an upper side plate-like member 72 and multiple ribs 73 (only a portion of which is denoted by the reference number) connecting these plate-like members made of aluminum alloy, which are formed by welding multiple extruded shape members and plate members. Air spring bearings 16 and a center pin bearing 17 which join air springs and a center pin which are components disposed on the bogie side are smoothly finished to correspond to shapes of the components disposed on the bogie side, so that accurate coupling with the bogie is realized. The bolster beam 15 has projections protruded toward the longitudinal directions of the underframe 10 at positions corresponding to the side beams 11 and the center beams 14. A longitudinal distance W1 of the underframe 10 between the ends of both projections corresponding to the position of the side beams 11 is greater than a width W2 of a doorway 21 disposed close to the bolster beam 15. The upper side plate-like member 72 is fastened via bolts to the lower surface of the side beams 11 at bolt fastening sections 56 (only a portion of which is denoted by the reference number) corresponding to the positions of the side beams 11, and via bolts to the lower surface of the center beams 14 at bolt fastening sections 57 (only a portion of which is denoted by the reference number) corresponding to the positions of the center beams 14. In the bolt fastening sections 57 positioned to correspond to the center beams 14 excluding the projections, the upper side plate-like member 72 and the lower side of the center beams 14 are fastened via bolts through bolt fastening holes 74 formed to the lower side plate-like member 71. The distances between the bolt fastening sections 56 and 57 in the longitudinal direction of the underframe 10 are small near the end of the projections. Since the lower surface of the side beams 11 and the lower surface of the center beams 14 are separated from the lower surface of the underframe 10 by a same distance in the vertical direction of the vehicle body, the bolster beam 15 is substantially parallel with the underframe 10, and sufficient space is present between the lower surface of the underframe 10 and the upper surface of the upper side plate-like member 72.

On the lower surface of the underframe 10 are joined wire/pipe modules 60 having bundled multiple wires and pipes along the longitudinal direction of the vehicle body. An appropriate method is selected for joining the wire/pipe module 60 to the lower surface of the underframe 10 according to the design and material of the wire/pipe modules 60, such as screws, bolts and adhesives. The wires and pipes joined to the respective devices are branched from the wire/pipe modules 60 near the respective devices. In the vicinity of a bogie, the wire/pipe modules 60 are passed through the space formed between the lower surface of the underframe 10 and the upper surface of the upper side plate-like member 72 of the bolster beam 15.

According to this arrangement, the wires and pipes can be passed through the wide space formed between the lower surface of the underframe 10 and the upper surface of the bolster beam 15, allowing the connectors for connecting wires to be assembled in advance or the pipes to be routed straight, so that the wires and pipes can be assembled in advance by outwork to minimize the work performed in the manufacturing site of the vehicle body, and the mounting of wires and pipes to the vehicle body can be facilitated by bundling multiples wires and pipes together into a module. Even further, the vehicle body after having the wire/pipe modules 60 mounted is manufactured using mechanical fastening means such as bolts and rivets, so that the damaging of the wires and pipes by the heat applied during welding can be prevented. Therefore, wires and pipes can be mounted through operations performed by looking down at the underframe 10. According to this arrangement, the cost and lead time required to manufacture the vehicle body can be prevented.

According to the present arrangement, since the bolster beam 15 is formed as a composite structure body, even when aluminum alloy is used as material for forming the beam, a sufficient strength can be ensured against various loads that act thereon during operation such as the loads applied from the bogie or the coupler. On the other hand, since the height of the bolster beam 15 is high, the height of the center beams 14 is reduced, and the space for wires and pipes is reduced. Furthermore, in the bolt fastening sections where load is applied in a concentrated manner, projections are formed to increase the number of bolts, and the intervals between fastening of bolts in the projections where load is concentrated are reduced to strengthen these sections. In addition, according to the present embodiment where the doorways 21 are positioned close to the bolster beams 15, the distance W1 between the projections of the bolter beams 15 corresponding to the position of the side beams 11 is set greater than width W2 of the doorways 21, and the load applied on the bolt fastening sections can be transmitted reliably to the side structures.

In the present embodiment, the bolster beam 15 is formed of aluminum alloy, but the same effects can be exerted even if the beam is formed of steel. In that case, the mass of the bolster beam 15 increases, but since it has a high strength, the height of the bolster beam 15 can be reduced and the space for mounting wires and pipes can be expanded.

According further to the present embodiment, the side beams 11, the center beams 14 and the bolster beams 15 are joined via bolts, but the same effects can be exerted by joining the beams by welding via rivets. If the beams are welded, the joint sections have higher reliability, but the welding must be performed carefully so that the heat of the welding operation will not damage the wires and pipes. When the beams are joined via rivets, it is difficult to re-fasten the bolster beams, but the operation time can be shortened.

According further to the present embodiment, bolster beams 15 are joined to the lower surface of the side beams 11 and the center beams 14, but the same effects can be exerted even if the bolter beams 15 are joined to the side surfaces of the side beams 11 and the center beams 14. In that case, it is necessary to divide the bolster beams 15, so that the fabrication takes much time and effort, but since the height of the center beams can be increased, it can have advantageous strength.

The technical scope of the present invention is determined based on the description of the claims and the description of the means for solving the problems, but it can extend to the range easily replaceable by those skilled in the art.

### [Reference Signs List]

- 1: Vehicle body
- 10: Underframe
- 11: Side beam
- 12: End beam
- 13: Coupler bearing
- 14: Center beam
- 15: Bolster beam
- 16: Air spring bearing
- 17: Center pin bearing
- 20: Side structure
- 21: Doorway
- 30: End structure
- 40: Roof structure
- 51: Plate-like member
- 52, 53: Width-direction beam
- 54, 55: Longitudinal beam
- 56, 57: Bolt fastening section
- 60: Wire/pipe module
- 71: Lower side plate-like member
- 72: Upper side plate-like member
- 73: Rib
- 74: Bolt fastening hole

## Claims

1. A vehicle body structure having an underframe (10) formed by a floor of the vehicle body (1), side beams (11) disposed at both width direction sides of the floor and extending in a longitudinal direction of the vehicle body, first and second bolster beams (15) extending in the width direction of the vehicle body, center beams (14) crossing the bolster beams and extending in the longitudinal direction of the vehicle body toward end sections (30) of the vehicle body, two doorway entrances (21) on one width direction side, and two further doorway entrances (21) on the other width direction side;
wherein:
a first pair of the doorway entrances (21), one on each width direction side, is arranged adjacent a first end of the vehicle body (1), and a second pair of the doorway entrances (21), one on each width direction side, is arranged adjacent a second, opposite end of the vehicle body (1); and
the doorway entrances (21) of the first pair are disposed near the first bolster beam (15), and the doorway entrances (21) of the second pair are disposed near the second bolster beam (15);
each bolster beam is joined to a lower surface or a side surface of the side beams and the center beams which cross the bolster beam;
a length (W1), in the longitudinal direction of the vehicle body, of a portion of each bolster beam joined to each side beam near the respective doorway entrance is longer than a length (W2), in the longitudinal direction of the vehicle body, of the doorway entrance;
each bolster beam has two air spring bearings (16) and a center pin bearing (17) disposed on a lower surface of the bolster beam for joining to respectively air springs and a center pin, the air spring bearings being located on opposite sides of the center pin bearing in the width direction of the vehicle body; and
wires and pipes are passed through a space formed between the floor and the bolster beams.

2. The vehicle body structure according to claim 1, wherein
the wires and pipes are formed as a module structure (60) having multiple wires and pipes bundled together.

3. The vehicle body structure according to claim 1, wherein
the center beams are formed of aluminum alloy, and welded to the floor.

4. The vehicle body structure according to claim 1, wherein
the bolster beams are each composed of a plate-like member (51) extending in the width direction of the vehicle body and multiple beam-like members (52-55) extending in the width direction of the vehicle body, the longitudinal direction of the vehicle body or in both directions.

5. The vehicle body structure according to claim 1, wherein
the bolster beams are fastened to a lower surface or a side surface of the side beams and the center beams via a mechanical fastening means (56, 57).

6. The vehicle body structure according to claim 5, wherein
a fastening interval of the bolster beams at both longitudinal ends of the bolster beams in the vehicle body of the portion fastened to the side beams and the center beams is smaller than a fastening interval in the area between said both longitudinal ends.

7. The vehicle body structure according to claim 1, wherein
the portions of the bolster beams joined to the side beams and the center beams have longitudinal lengths in the longitudinal direction of the vehicle body which are longer than the longitudinal lengths of other portions.

8. The vehicle body structure according to claim 1, wherein
the bolster beams are made of steel.

9. A method for manufacturing a vehicle body structure according to claim 1, the method comprising:
a step of securing a wire/pipe module (60) to the lower surface of the floor;
a step of arranging the bolster beams to the lower surface of the underframe astride the wire/pipe module disposed on the lower surface of the underframe; and
a step of fixing each arranged bolster beams to a lower surface or a side surface of the side beams and the center beams which cross the bolster beam.

## Patentansprüche

1. Fahrzeugkarosseriestruktur mit einem Unterrahmen (10), der von einem Boden der Fahrzeugkarosserie (1) gebildet ist, Seitenbalken (11), die an beiden Breitenrichtungsseiten des Bodens angeordnet sind und sich in Längsrichtung der Fahrzeugkarosserie erstrecken, einen ersten und einen zweiten Wiegenbalken (15), die sich in Breitenrichtung der Fahrzeugkarosserie erstrecken, Mittelbalken (14), die die Wiegenbalken kreuzen und sich in Längsrichtung der Fahrzeugkarosserie hin zu Endabschnitten (30) der Fahrzeugkarosserie erstrecken, zwei Türeinstiegen (21) auf einer Breitenrichtungsseite und zwei weiteren Türeinstiegen (21) auf der anderen Breitenrichtungsseite;
wobei:
ein erstes Paar der Türeinstiege (21), einer auf jeder Breitenrichtungsseite, angrenzend an ein erstes Ende der Fahrzeugkarosserie (1) angeordnet ist und ein zweites Paar der Türeinstiege (21), einer auf jeder Breitenrichtungsseite, angrenzend an ein zweites, entgegengesetztes Ende der Fahrzeugkarosserie (1) angeordnet ist; und
die Türeinstiege (21) des ersten Paars in der Nähe des ersten Wiegenbalkens (15) angeordnet sind und die Türeinstiege (21) des zweiten Paars in der Nähe des zweiten Wiegenbalkens (15) angeordnet sind;
jeder Wiegenbalken mit einer Unterseite oder einer Seitenfläche der Seitenbalken und der Mittelbalken, die den Wiegenbalken kreuzen, gekoppelt ist;
eine Länge (W1) eines Abschnitts des jeweiligen Wiegenbalkens, der mit dem jeweiligen Seitenbalken in der Nähe des entsprechenden Türeinstiegs gekoppelt ist, in Längsrichtung der Fahrzeugkarosserie länger ist als eine Länge (W2) des Türeinstiegs in Längsrichtung der Fahrzeugkarosserie;
jeder Wiegenbalken zwei Luftfederlagerungen (16) und eine Mittelbolzenlagerung (17) aufweist, die auf einer Unterseite des Wiegenbalkens angeordnet sind, um jeweils mit Luftfedern und einem Mittelbolzen gekoppelt zu werden, wobei die Luftfederlagerungen auf gegenüberliegenden Seiten der Mittelbolzenlagerung in Breitenrichtung der Fahrzeugkarosserie angeordnet sind; und
Drähte und Rohre durch einen Hohlraum verlaufen, der zwischen der Bodenfläche und den Wiegenbalken gebildet ist.

2. Fahrzeugkarosseriestruktur nach Anspruch 1, wobei die Drähte und Rohre als Modulstruktur (60) ausgebildet sind, bei der mehrere Drähte und Rohre gebündelt sind.

3. Fahrzeugkarosseriestruktur nach Anspruch 1, wobei die Mittelbalken aus Aluminiumlegierung bestehen und an die Bodenfläche geschweißt sind.

4. Fahrzeugkarosseriestruktur nach Anspruch 1, wobei die Wiegenbalken jeweils aus einem plattenähnlichen Element (51), das sich in Breitenrichtung der Fahrzeugkarosserie erstreckt, und mehreren balkenähnlichen Elementen (52-55) bestehen, die sich in Breitenrichtung der Fahrzeugkarosserie, in Längsrichtung der Fahrzeugkarosserie oder in beiden Richtungen erstrecken.

5. Fahrzeugkarosseriestruktur nach Anspruch 1, wobei die Wiegenbalken an einer Unterseite oder einer Seitenfläche der Seitenbalken und der Mittelbalken über mechanische Befestigungsmittel (56, 57) befestigt sind.

6. Fahrzeugkarosseriestruktur nach Anspruch 5, wobei ein Befestigungsabstand der Wiegenbalken an beiden Längsenden der Wiegenbalken in der Fahrzeugkarosserie des Abschnitts, der an den Seitenbalken und den Mittelbalken befestigt ist, kleiner ist als ein Befestigungsabstand im Bereich zwischen den beiden Längsenden.

7. Fahrzeugkarosseriestruktur nach Anspruch 1, wobei die Abschnitte der Wiegenbalken, die an den Seitenbalken und den Mittelbalken befestigt sind, in Längsrichtung der Fahrzeugkarosserie länger sind als andere Abschnitte.

8. Fahrzeugkarosseriestruktur nach Anspruch 1, wobei die Wiegenbalken aus Stahl bestehen.

9. Verfahren zur Herstellung einer Fahrzeugkarosseriestruktur nach Anspruch 1, wobei das Verfahren Folgendes umfasst:
einen Schritt des Befestigens eines Draht/Rohr-Moduls (60) an der Unterseite der Bodenfläche;
einen Schritt des Anordnens der Wiegenbalken an der Unterseite des Unterrahmens quer über das an der Unterseite des Unterrahmens angeordnete Draht /Rohr-Modul; und
einen Schritt des Fixierens jedes angeordneten Wiegenbalkens an einer Unterseite oder einer Seitenfläche der Seitenbalken und der Mittelbalken, die den Wiegenbalken kreuzen.

## Revendications

1. Structure de caisse de véhicule ayant un châssis (10) formé par un plancher de la caisse de véhicule (1), des longerons latéraux (11) disposées des deux côtés de direction de largeur du plancher et s'étendant dans une direction longitudinale de la caisse de véhicule, des premier et second sous-longerons (15) s'étendant dans la direction de largeur de la caisse de véhicule, des poutres centrales (14) croisant les sous-longerons et s'étendant dans la direction longitudinale de la caisse de véhicule vers des sections d'extrémité (30) de la caisse de véhicule, deux entrées de passage de porte (21) sur un premier côté de direction de largeur, et deux entrées de passage de porte supplémentaires (21) sur l'autre côté de direction de largeur ;
dans laquelle :
une première paire d'entrées de passage de porte (21), une sur chaque côté de direction de largeur, est agencée adjacente à une première extrémité de la caisse de véhicule (1), et une seconde paire d'entrées de passage de porte (21), une sur chaque côté de direction de largeur, est agencée adjacente à une seconde extrémité opposée de la caisse de véhicule (1) ; et
les entrées de porte (21) de la première paire sont disposées près du premier sous-longeron (15), et les entrées de porte (21) de la seconde paire sont disposées près du second sous-longeron (15) ;
chaque sous-longeron est relié à une surface inférieure ou à une surface latérale des longerons latéraux et des poutres centrales qui croisent le sous-longeron ;
une longueur (W1), dans la direction longitudinale de la caisse de véhicule, d'une partie de chaque sous-longeron reliée à chaque poutre latérale près de l'entrée de porte respective, est plus longue qu'une longueur (W2), dans la direction longitudinale de la caisse de véhicule, de l'entrée de porte ;
chaque sous-longeron comprend deux paliers à ressorts pneumatiques (16) et un palier d'axe central (17) disposé sur une surface inférieure du sous-longeron pour se raccorder respectivement à des ressorts pneumatiques et à un axe central, les paliers à ressorts pneumatiques étant situés sur des côtés opposés du palier d'axe central dans la direction de la largeur de la caisse de véhicule ; et
des fils et des tuyaux sont passés à travers un espace formé entre le plancher et les sous-longerons.

2. Structure de caisse de véhicule selon la revendication 1, dans laquelle
les fils et les tuyaux sont formés sous la forme d'une structure de module (60) ayant plusieurs fils et tuyaux regroupés ensemble.

3. Structure de caisse de véhicule selon la revendication 1, dans laquelle
les poutres centrales sont formées d'un alliage d'aluminium et soudées au plancher.

4. Structure de caisse de véhicule selon la revendication 1, dans laquelle
les sous-longerons sont composés chacun d'un élément analogue à une plaque (51) s'étendant dans la direction de largeur de la caisse de véhicule et de multiples éléments analogues à une poutre (52 à 55) s'étendant dans la direction de largeur de la caisse de véhicule, la direction longitudinale de caisse de véhicule, ou dans les deux directions.

5. Structure de caisse de véhicule selon la revendication 1, dans laquelle
les sous-longerons sont fixés à une surface inférieure ou à une surface latérale des longerons latéraux et des poutres centrales par l'intermédiaire de moyens de fixation mécanique (56, 57).

6. Structure de caisse de véhicule selon la revendication 5, dans laquelle
un intervalle de fixation des sous-longerons aux deux extrémités longitudinales des sous-longerons dans la caisse de véhicule de la partie fixée aux longerons latéraux et aux poutres centrales est inférieur à un intervalle de fixation dans la zone située entre lesdites deux extrémités longitudinales.

7. Structure de caisse de véhicule selon la revendication 1, dans laquelle
les parties des sous-longerons reliées aux longerons latéraux et aux poutres centrales ont des longueurs longitudinales dans la direction longitudinale de la caisse de véhicule qui sont plus longues que les longueurs longitudinales des autres parties.

8. Structure de caisse de véhicule selon la revendication 1, dans laquelle
les sous-longerons sont réalisés en acier.

9. Procédé de fabrication d'une structure de caisse de véhicule selon la revendication 1, le procédé comprenant :
une étape de fixation d'un module de fils/tuyaux (60) à la surface inférieure du plancher ;
une étape consistant à agencer les sous-longerons sur la surface inférieure du châssis à cheval sur le module de fils/tuyaux disposé sur la surface inférieure du châssis ; et
une étape de fixation de chaque sous-longeron agencé à une surface inférieure ou à une surface latérale des longerons latéraux et des poutres centrales qui croisent le sous-longeron.
